# EUROPEAN PATENT APPLICATION

(11) **EP 2 497 579 A1**
(43) Date of publication of application: **12.09.2012**
(21) Application number: 11157275.6
(22) Date of filing: 08.03.2011
(51) Int. Cl.: B09B 3/00, B29B 17/04

(54) **Method and installation for processing materials from disposed cooling equipment**

(71) Applicant: RBPbeheer BV, 4617 JC Bergen op Zoom (NL)
(72) Inventor: Nienoord, Michiel, 2574 AR, Den Haag (NL); Cramers, Peter Hendrikus Mechtildis Renier, 4410, Liestal (CH); De Bode, Rogier Falco, 4617 JC, Bergen op Zoom (NL)
(74) Representative: Zonneveld, Hendrik Jan

(57) **Abstract**

Method and installation for processing disposed cooling equipment. The method comprises the following steps:
- removal (3) of coolants from the cooling equipment;
- separating (5) insulation foam and transporting it to a closed environment, where it is pulverized (7);
- collecting a mixture comprising the removed coolants and foaming agents released in the closed environment;
- separating (11) the collected mixture at least into one or more CFC fractions and one ore more hydrocarbon fractions.

## Description

The present invention relates to a method and an installation for processing waste materials from disposed cooling equipment, such as refrigerators, freezers, air conditioners or similar cooling devices which cool by adiabatic evaporation of one or more coolants.

Until 1995 chlorofluorocarbons (CFCs), in particular dichlorodifluoromethane (R12 or Freon 12) and trichlorofluoromethane (R11 or Freon 11) , were used in refrigerators as coolants and as foaming agents within polyurethane foam used as thermal insulation. Since CFCs are believed to be the main cause of the depletion of ozone in the stratosphere, government regulations in most jurisdictions aim to phase out the use of CFCs. When older refrigerators or air conditioners are being disposed of, the used CFCs should be recovered and destroyed.

In modern refrigerators hydrocarbon coolants, such as cyclopentane or isobutane, are used as a substitute for the banned CFCs. These modern refrigerators have to be disposed of alongside the old refrigerators containing CFCs. These hydrocarbons are flammable and toxic volatile organic compounds, so-called "VOC's", for which governmental regulation impose strict emission limits.

Since disposed CFC type refrigerators and disposed modern refrigerators are processed simultaneously, these hydrocarbon coolants and foaming agents are collected in a mixture with the CFCs of the older refrigerators. For instance, in the Cryo-Condap® process of Air Products and the DuoCondex® process of Messer CFCs and hydrocarbon coolants are recovered by cryogenic condensation. The recovered mixture of CFCs and hydrocarbon coolants and foaming agents is subsequently destroyed.

It is an object of the present invention to provide a more economic method of processing old refrigerators, freezers, air conditioners and similar cooling devices requiring less net energy consumption.

The object or the invention is achieved with a method for processing disposed cooling equipment, the method comprising the following steps:
- removal of coolants from the cooling equipment;
- separating insulation foam and transporting it to a closed environment, where it is pulverized;
- collecting a mixture comprising the removed coolants and foaming agents released in the closed environment;
- separating the collected mixture into one or more CFC fractions and one or more hydrocarbon fractions.

In this context, CFC fractions are fractions comprising the largest part of the CFCs originally contained by the coolants and the foaming agents collected in the closed environment, and hydrocarbon fractions are fractions comprising the largest part of the CFCs originally contained by the coolants and the foaming agent collected in closed environments. The obtained degree of purity of the CFC fractions can be as high as 95 wt.% of the total CFC fraction weight or higher, e.g., at least 98 wt.% or 99 wt.%. The obtained degree of purity of the hydrocarbon fractions can be as high as 95 wt.% of the total hydrocarbon fraction weight or higher, e.g., at least 98 wt.% or 99 wt.%.

In the first step, when coolants are separated, oil and optionally other liquids present in the cooling equipment can also be tapped. If part of the coolants is mixed into the oil, the coolants are separated from the oil.

Besides the insulation foam also other materials of the disposed cooling equipment will generally be separated, e.g., by shredding. Shredding can take place in a second closed environment which enables further recollection of coolants and gases released by the shredded materials.

It has been found that the CFC fractions and the hydrocarbon fractions with high purity can effectively be separated by distillation. The distillation process can for instance include a first distillation step separating a residue comprising a mixture of cyclopentane and trichlorofluoromethane, and a first distillate comprising a mixture of isobutane and dichlorodifluoromethane, wherein the mixture of cyclopentane and trichlorofluoromethane is subsequently separated by distillation into a residue comprising isobutane as a first hydrocarbon fraction and a distillate comprising dichlorodifluoromethane as a first CFC fraction, while the distillate from the first distillation step is separated by distillation into a residue comprising cyclopentane as a second hydrocarbon fraction and a distillate comprising trichlorofluoromethane as a second CFC fraction.

This order of steps results in hydrocarbon fraction with extremely low residual CFC contents. As a result the hydrocarbon fractions can be combusted without the need of taking additional measures to take care of the CFCs. The order of process steps minimizes energy consumption. The process is even more economical if the hydrocarbon fractions are reused in the course of the process as a fuel.

An alternative distillation process can for instance include a first distillation step isolating a cyclopentane residue as a first hydrocarbon fraction, and a first distillate which is subsequently subjected to a second distillation step isolating a trichlorofluoromethane residue as a first CFC fraction, and a second distillate which is subjected to a third distillation step for separating an isobutane residue as a second hydrocarbon fraction, and a final dichlorodifluoromethane distillate, as a second CFC fraction.

If so desired, the distillation steps can also be carried out in a different order.

If so desired, the distillation process can also include further steps, such as removal of other possible coolants, contaminants or gases used for creating an inert atmosphere.

More than 95 wt%, e.g., more than 98 wt.% of the CFCs of the processed cooling equipment can be isolated for further processing. Virtually all CFCs which are removed from the disposed cooling equipment in the first step can be retained and can be isolated for destruction.

The degree of purity obtained by distillation can be very high. The CFC content in the separated hydrocarbon fractions can be, e.g., at most 1 wt% of the total weight of the fraction or, e.g., at most 0,1 wt.%, for instance 0,06 wt.% or lower.

Before distillation the collected coolants and foaming agents can first be dehumidified. The dehumidification can for example take place in a configuration of two condensers with a compressor in between for providing elevated pressures of 0,5 - 6 bar, e.g., about 1,5 bar. The separated moisture can contain traces of further contaminants.

Also other gases, such as inerting gases or contaminant gases can be removed, e.g., after dehumidification. This can for example take place in a cryocondenser where the gases are cooled to, e.g., - 120°C, or lower, to liquefy the mixture. Subsequently, nitrogen and/or oxygen are separated, e.g., by distillation. These gases can be returned to the coolant tap, the shredder or the pulveriser. Optionally, a part of it can be discharged.

The cryogenic condenser can make use of a liquid nitrogen flow, which is subsequently recycled as an inerting gas to the coolant tap and/or pulveriser for reducing the oxygen content in order to reduce or eliminate the risk for explosions or combustion of the volatile organic content within the environment.

When passing these closed environments, the nitrogen flow mixes with the CFCs and hydrocarbon coolant gases as well as oxygen, moisture, carbon dioxide and other possible contaminant gases. To create a closed or semi-closed loop, the flow can subsequently be returned to the condenser. Part of this nitrogen flow can be discharged from the loop to prevent overpressure.

The first closed environment can for example include a gastight shredder. The shredded cooling equipment can subsequently be discharged to one or more separators, such as cyclones and/or windshifters for separation of foam insulation. The separated foam can then be transported to the second closed environment formed by a gastight powder mill or pulveriser.

The method according to the invention can effectively be carried out in an installation for processing disposed cooling equipment comprising a gastight coolant tap for drawing off coolants from the disposed cooling equipment, a gastight insulation foam pulveriser, a gas transport line from the coolant tap and the pulveriser to a separation unit comprising separate outlets for one or more CFC fractions and one or more hydrocarbon gas fractions.

The separation unit can for instance comprise a condenser and a distillation unit between the condenser and the outlets. The condenser can for example be a cryogenic condenser. In that case, the installation can comprise a closed nitrogen circuit with a liquid nitrogen flow path via the cryogenic condenser and a nitrogen gas return path via the pulveriser, the coolant tap and/or the shredder as an inerting gas for reducing the relative oxygen content.

As set out above the separation unit can comprise a plurality of distillation units for the parallel or serial individual separation of at least cyclopentane, isobutane and dichlorodifluoromethane and trichlorofluoromethane.

The present invention will be elucidated with reference to the figures wherein:
- Figure 1:: shows schematically an exemplary embodiment of a process according to the present invention;
- Figure 2:: shows schematically the separation unit for use in the process of Figure 1;
- Figure 3:: shows schematically an alternative separation unit.

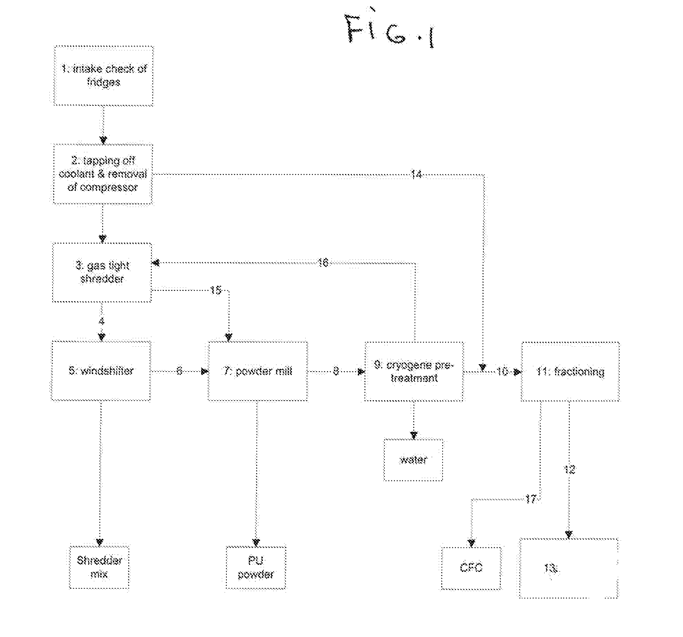

Figure 1 shows schematically the various steps of a method of processing materials of used refrigerators or other types of cooling equipment using coolant gases. The disposed refrigerators are first checked at an intake station 1. Subsequently, the refrigerators are transported to a coolant removal station 2 for tapping off coolants and oil. In older refrigerators these coolants typically include dichlorodifluoromethane and trichlorofluoromethane, generally referred to as R11 and R12 respectively. In more modern refrigerators cyclopentane or isobutane are used.

The refrigerators are subsequently transported to a gastight shredder 3 where the materials are shredded. These materials include metal casing materials, plastic interior parts, motor parts and electrics, insulation foam, etc. Insulation foams from refrigerators typically are polyurethane foams. The foam structure is obtained by using a foaming agent during curing of the polyurethane. Particularly in older refrigerators these blowing agents include CFCs. The materials also include remnants of coolants. The shredder 3 is gastight, so it forms a closed environment where any released coolant gases or foaming agents are collected. To reduce or eliminate a risk of explosion in the gastight shredder 3, the oxygen content in the shredder 3 is lowered by feeding inert gases, in particular nitrogen, into the shredder 3.

Via a closed line 4 the mixture of shredded materials is fed into a windshifter 5. In the windshifter 5 insulation foam is separated from the other shredded materials by airflow. The isolated foam is then transported via a closed line 6 to a gastight powder mill or pulveriser 7. The other materials are discharged as a mixture for further processing. The gastight pulveriser 7 forms a closed environment where any foaming agents released from pulverization of the insulation foam are collected. As in the shredder 3 the oxygen content in the pulveriser 7 is kept low by feeding inert gases from the shredder 3 via a closed line 15 into the pulveriser 7 in order to reduce the risk of explosion. Powdered insulation foam is discharged and the collected gases are fed via a closed line 8 to dehumidifier station comprising a condenser, a compressor and a chiller, reducing the temperature to about 5°C at an elevated pressure of about. 1,5 bar. Moisture is withdrawn from the mixture and discharged.

The remaining gas mixture is subsequently fed into a cryogenic condenser 9. Here the gases are cooled to cryogenic conditions. This way nitrogen is separated from the liquefied CFCs and hydrocarbon coolants. The nitrogen is returned as a gas via a closed gas line 12 to the shredder 3 for inerting the internal atmosphere within the shredder 3.

The liquefied mixture is then transported via a closed line 10 to a distillation unit 11 for separation of CFC fractions containing more than 95 wt.% dichlorodifluoromethane and trichlorofluoromethane, respectively, and hydrocarbon fractions with CFC contents below 0,1 wt.%, e.g., 0,06 wt.% or even lower. The CFC fractions are collected into pressure vessels 17 for transport to a destruction station. The cyclopentane and isobutane fractions are discharged via a closed line 12 for reuse, either as a mixture or separately. The hydrocarbon gases can for instance be used as a fuel in one or more power stations 13 of the installation used for the disclosed process. This contributes to the overall efficiency and economy of the process as a whole.

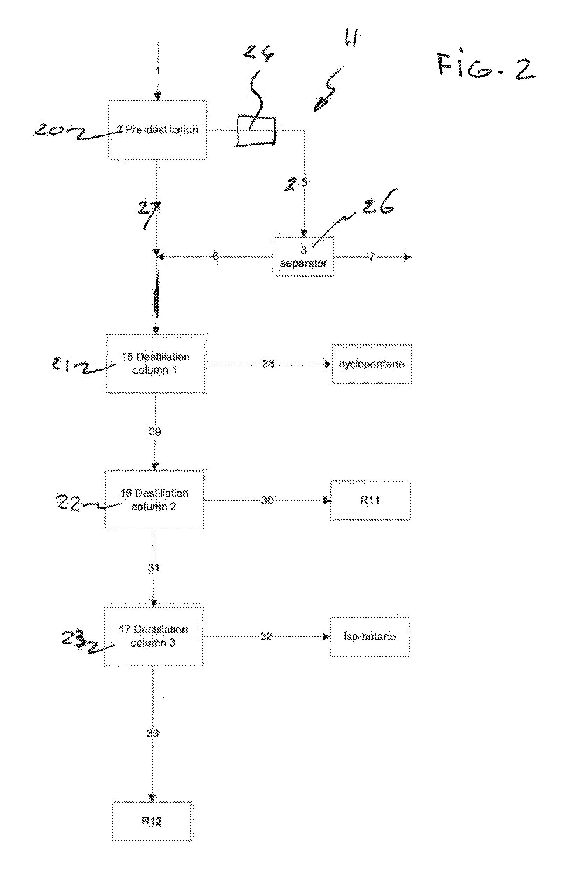

Figure 2 is a schematic representation of the process taking place within the separation unit 11. The separation unit 11 comprises a pre-distillation unit 20 for the removal of residual nitrogen and oxygen and three distillation columns 21, 22, 23 for the subsequent separation of the CFCs and hydrocarbon coolant gases.

The liquid mixture of CFCs and hydrocarbon gases may initially contain residual contents of nitrogen and oxygen, typically in an amount of about 0,5 wt.%. To remove these residual contents, the mixture is first fed into the pre-distillation unit 20. The N₂ / O₂ distillate is discharged from the pre-distillation unit 20 at a temperature of about -40°C and transported via a heat exchanger 24 where its temperature is lowered to about -120°C, and line 25 to separator 26, where the very last CFCs and hydrocarbons are separated from the N₂ / O₂ mixture. The N₂ / O₂ mixture is then returned to the cryogene condenser 9 (shown in Figure 1), while the separated CFCs and hydrocarbons are returned to the main flow 27 from the pre-distillation unit 20 to the first distillation column 21.

The mixture is fed into the distillation column 21 at a temperature of about 24°C and a pressure of about 2 bar. The mixture is separated into a residue and a distillate. The distillate is a first hydrocarbon fraction comprising more than 95 wt.% cyclopentane and comprising 0,06 % CFCs. The cyclopentane fraction. is discharged via closed gas line 28 for reuse as a fuel in a power station in the described chain of process steps. The residue is a liquid mixture of isobutane and CFC compounds dichlorodifluoromethane (also called R12 or freon 12) and trichlorofluoromethane (also called R11 or freon 11) .

This mixture is transported via line 29 to the second distillation column 22 at a temperature of 1°C. In the second distillation column 22 the mixture is separated into a residue containing isobutane and dichlorodifluoromethane, and a distillate containing trichlorofluoromethane and typically about 8 wt.% of isobutane. The distillate is discharged via line 30 at a temperature of about 40°C and is packed into gaslight vessels for transportation to a destruction station.

The residue comprising dichlorodifluoromethane and isobutane is transported to the third distillation column 23 via line 31 at a temperature of -3°C. The mixture is separated into a distillate containing isobutane with less than 0,02 wt% of CFCs, and a residue containing dichlorodifluoromethane. The isobutane distillate is discharged via line 32 for reuse as a fuel in a power station in the described chain of process steps. The dichlorodifluoromethane fraction is discharged at a temperature of -17°C to be packed into gaslight containers for transportation to a destruction unit.

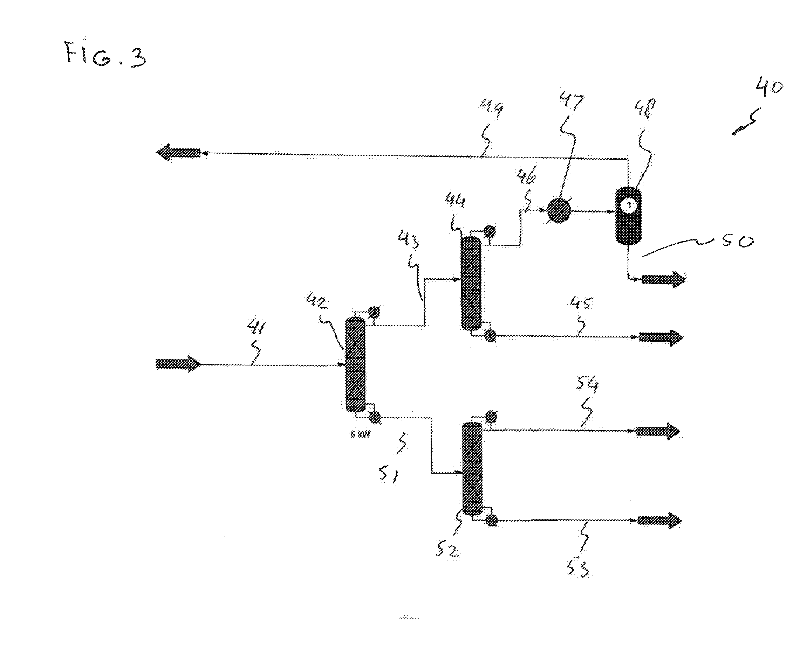

Figure 3 shows an alternative arrangement of a separation unit 40. A liquefied mixture of CFCs and hydrocarbons is fed via a feed line 41 from a cryo-condenser to a first distillation unit 42. The actual composition of the mixture is dependent on the processed cooling equipment and the types of coolants and blowing agents used. In this stage, the mixture will generally have a cyclopentane content of 30 - 60 wt.%, e.g., 45 45 wt.%, e.g., about 50 - 52 wt.%. The dichlorodifluoromethane content will generally be about 10 - 15 wt.%, the isobutane content will generally be about 20 - 30 wt.%, e.g., about 24 - 28 wt.%. The trichlorofluoromethane content will generally be about 5 - 10 wt.%, e.g., about 5 - 7 wit.%. The mixture will generally also comprise residual amounts of nitrogen and oxygen (less than 1 wt. %0 and water (below 3 wt.%). In this respect all percentages by weight are related to the total weight of the composition. The mixture is fed to the separation unit 42 at a temperature of about 10°C and a pressure of about 8 bar. The mass flow is about 46 kg/h. In the distillation unit 42 the mixture is separated by distillation into a residue comprising a mixture of cyclopentane and trichlorofluoromethane, and a distillate comprising a mixture of isobutane and dichlorodifluoromethane. Substantially all residual oxygen and nitrogen will be included in the distillate, while the residual water content will remain in the residue.

The mixture of isobutane and dichlorodifluoromethane is subsequently transported via line 43 at a temperature of about 45°C and a pressure of about 7 bar and a mass flow of about 18 - 19 kg/h to a second distillation unit 44, where it is separated by distillation into an isobutane residue and a dichlorodifluoromethane distillate. The isobutane residue is discharged via a line 45, for instance for reuse as a fuel. Substantially all residual nitrogen and oxygen is included in the dichlorodifluoromethane distillate, which is transported via a line 46 at a temperature of 22 - 23°C, a pressure of about 6 - 7 bar and a mass flow of 6 - 7 kg/h, via a heat exchanger 47 which lowers the to about 2°C, to a separation vessel 48, where the residual nitrogen and oxygen are separated from the mixture and recycled via a line 49 to the cryocondenser. A dichlorodifluoromethane fraction is discharged via line 50 at a temperature of about 2°C, a pressure of about 6 - 7 bar and a mass flow of 5 - 6 kg/h to a destruction unit.

The residue of the first distillation step comprising a mixture of cyclopentane and trichlorofluoromethane is transported via line 51 at a temperature of about 110°C, a pressure of about 7 bar and a mass flow of 27 - 28 kg/h to a third distillation unit 52. Here the mixture is separated by distillation into a residue comprising cyclopentane and a distillate comprising trichlorofluoromethane. The cyclopentane is discharged via a line 53 at a temperature of about 80 - 82°C, a pressure of about 3 bar and a mass flow of about 23 - 25 kg/h, for instance for reuse as a fuel. The trichlorofluoromethane fraction is discharged via line 54 at a temperature of 55 - 57°C, a pressure of about 3 bar and a mass flow of about 3 kg/h to a destruction unit.

## Claims

1. Method for processing disposed cooling equipment, the method comprising the following steps:
- removal of coolants from the cooling equipment;
- separating insulation foam and transporting it to a closed environment, where it is pulverized;
- collecting a mixture comprising the removed coolants and foaming agents released in the closed environment;
- separating the collected, mixture at least into one or more CFC fractions and one ore more hydrocarbon fractions.

2. Method according to claim 1 wherein the one or more CFC fractions and the one or more hydrocarbon fractions are at least partly separated by distillation.

3. Method according to claim 2 wherein in the distillation includes a first distillation step isolating a cyclopentane residue as a first hydrocarbon fraction, and a first distillate which is subsequently subjected to a second distillation step isolating a trichlorofluoromethane residue as a first CFC fraction, and a second distillate which is subjected to a third distillation step for separating an isobutane residue as a second hydrocarbon fraction, and a final dichlorodifluoromethane distillate, as a second CFC fraction.

4. Method according to claim 2 wherein in the distillation includes a first distillation step separating a residue comprising a mixture of cyclopentane and trichlorofluoromethane, and a first distillate comprising a mixture of isobutane and dichlorodifluoromethane, wherein the mixture of cyclopentane and trichlorofluoromethane is subsequently separated by distillation into a residue comprising isobutane as a first hydrocarbon fraction and a distillate comprising dichlorodifluoromethane as a first CFC fraction, while the distillate from the first distillation step is separated by distillation into a residue comprising cyclopentane as a second hydrocarbon fraction and a distillate comprising trichlorofluoromethane as a second CFC fraction.

5. Method according to any one of the preceding claims wherein the CFC content in the hydrocarbon fractions is at most 1 wt% of the total weight of the fraction, e.g., at most 0,1 wt.%.

6. Method according to any one of the preceding claims wherein the collected gases from the first and second environment are first fed into a condenser for isolation of a mixture of CFC and hydrocarbon coolant gases, and wherein subsequently the mixture of CFCs and hydrocarbon coolant gases is separated into the one or more CFC fractions and the one or more hydrocarbon gas fractions.

7. Method according to claim 6 wherein the condenser is a cryogenic condenser using a liquid nitrogen flow, which is subsequently recycled as a gas to the first and/or second closed environment.

8. Method according to claim 7 wherein the nitrogen flow is subsequently returned to the condenser in a closed loop.

9. Method according to any one of the preceding claims wherein the first closed environment includes a gaslight shredder, and wherein shredded cooling equipment is discharged to one or more cyclones for separation of foam insulation, which is subsequently transported to the second closed environment formed by a gastight powder mill.

10. Installation for processing disposed cooling equipment comprising a gaslight coolant collector for drawing off coolants, a gaslight insulation foam pulveriser, a gas transport line from the tap and the pulveriser to a separation unit comprising separate outlets for one or more CFC fractions and one or more hydrocarbon gas fractions.

11. Installation according to claim 10 wherein the separation unit comprises a condenser and a distillation unit between the condenser and the outlets.

12. Installation according to claim 11 wherein the condenser is a cryogenic condenser and wherein the installation comprises a closed nitrogen circuit with a liquid nitrogen flow path via the cryogenic condenser and a nitrogen gas return path via the pulveriser and the coolant collector to reduce the oxygen content .

13. Installation according to any one of the preceding claims 10 - 12 wherein the distillation unit comprises a serial arrangement of distillators for the individual separation of at least cyclopentane, isobutane and dichlorodifluoromethane and trichlorofluoromethane.

14. Installation according to any one of the preceding claims 10 - 13 wherein the distillation unit comprises a first distillator for the separation of a first residue comprising a mixture of cyclopentane and trichlorofluoromethane, and a first distillate comprising a mixture of isobutane and dichlorodifluoromethane, wherein the installation comprises a second distillator for the separation of the first residue into a cyclopentane fraction and a trichlorofluoromethane fraction, and a third distillator for the separation of the first distillate into an isobutane fraction and a dichlorodifluoromethane fraction.

15. Installation according to any one of claims 10 - 14 further comprising a shredder and a cyclone and/or a windshifter between the shredder and the pulveriser.
